# EUROPÄISCHE PATENTSCHRIFT

(11) **EP 2 383 542 B1**
(45) Veröffentlichungstag und Bekanntmachung des Hinweises auf die Patenterteilung: **10.06.2015**
(21) Anmeldenummer: 10193350.5
(22) Anmeldetag: 01.12.2010
(51) Int. Cl.: G01C 9/26

(54) **Wasserwaage**
Spirit level
Niveau à bulle

(30) Priorität: 29.04.2010 DE 202010005329 U
(43) Veröffentlichungstag der Anmeldung: 02.11.2011
(73) Patentinhaber: Stabila Messgeräte Gustav Ullrich GmbH, 76855 Annweiler (DE)
(72) Erfinder: Kallabis, Gabriel, 76848, Spirkelbach (DE)
(74) Vertreter: Stoffregen, Hans-Herbert

(56) Entgegenhaltungen:
- EP-A1- 1 122 512
- EP-A1- 1 480 010
- US-A- 285 775
- US-A- 5 940 978
- US-A1- 2005 229 415

## Beschreibung

Die Erfindung bezieht sich auf eine Wasserwaage umfassend einen-Profilkörper insbesondere Hohlkammerprofilkörper, als Wasserwaagenkörper mit einer eine erste Außenfläche in Form einer Messfläche zur Verfügung stellenden Bodenwandung, einer dieser gegenüberliegenden Kopfwandung mit zumindest abschnittsweise parallel zu der Messfläche verlaufender zweiten Außenfläche in Form einer Kopffläche sowie die Bodenwandung mit der Kopfwandung verbindenden Seitenwandungen, die zum einen eine äußere erste Seitenfläche und zum anderen eine äußere zweite Seitenfläche aufweisen, wobei der Profilkörper zumindest einen Libellenkörper aufweist, dessen Libelle optisch vorzugsweise zumindest über eine die Kopfwandung durchsetzende Aussparung erfassbar ist, und wobei der Profilkörper in Bezug auf seine senkrecht zu der Messfläche verlaufende Hochachse seitenflächenseitig über die Länge des Profilkörpers asymmetrisch ausgebildet ist und eine Seitenfläche als die erste Seitenfläche in Längsrichtung des Profilkörpers betrachtet einen rinnenförmigen Verlauf aufweist.

Eine Wasserwaage ist ein Prüfgerät zur horizontalen oder vertikalen Ausrichtung eines Objekts und umfasst eine oder mehrere Libellen, die zu einer Messfläche ausgerichtet sind. Der Körper einer Wasserwaage kann aus Holz, aus Kunststoff und insbesondere aus Metall bestehen, wobei sich Rechteckprofilkörper durchgesetzt haben, die Abschnitte eines Strangprofils sind. Andere Profile wie H-Profile gelangen gleichfalls zum Einsatz.

Unabhängig von der Profilgeometrie ist jedoch allen Wasserwaagenkörpern grundsätzlich eigen, dass der Körper Seitenflächen aufweist, die in Bezug auf seine Hochachse symmetrisch oder im Wesentlichen symmetrisch zu der Hochachse des Körpers verlaufen, wobei auf oder an diesen angeordnete Befestigungen für z.B. Libellenhalterungen bei dieser Betrachtungsweise unberücksichtigt bleiben. Gleiches gilt für ggf. vorhandene Anschlagkanten. Mit anderen Worten werden auch Körper, die geringfügige bereichsweise Abweichungen in den Längsseiten aufweisen, als symmetrisch bewertet.

Der DE-B-11 2005 000 019 ist eine Wasserwaage mit darin befestigten Libellen zu entnehmen, wobei der Wasserwaagenkörper ein Rechteckprofil aufweist oder aus einem oberen zylindrischen und einem unteren trapezoidförmigen Abschnitt besteht.

Die DE-A-454 471 bezieht sich auf eine Wasserwaage mit Querlibelle und weist einen symmetrischen Wasserwaagenkörper auf, dessen Seitenflächen einen konkaven Verlauf aufweisen.

Gegenstand der DE-A-2 040 895 ist eine Wasserwaage aus Kunststoff mit einem Körper in Form eines Rechteckprofils.

Ein Laserstrahlerzeuger für eine Wasserwaage ist der DE-U-93 19 184 zu entnehmen. Der Wasserwaagenkörper besteht aus einem Rechteckhohlprofil, in dem sich eine Laserdiode befindet.

Eine Wasserwaage mit einem hohlkastenförmigen Wasserwaagenkörper wird in der DE-U-83 11 864 beschrieben.

Ein Richtgerät zum Setzen von Aufnahmedosen ist Gegenstand der DE-U-82 10 917.

Die US-A-5,134,780 bezieht sich auf eine Wasserwaage mit einem Doppel-T-Profil als Wasserwaagenkörper.

Die US-A-5,940,978 bezieht sich auf eine Wasserwaage mit einem Körper, der aus zwei im Schnitt ein Trapez aufweisenden Längsabschnitten zusammengesetzt ist.

Ein Wasserwaagenkörper nach der US-A-2005/0229415 setzt sich aus einem oberen zylindrischen und einem unteren trapezoidförmigen Abschnitt zusammen.

In der EP-A-1 122 512 wird eine Winkel-Wasserwaage beschrieben, wobei der Körper einen L-förmigen Querschnitt aufweist.

Der EP-A-1 480 010 ist eine Wasserwaage mit verschiebbaren Verlängerungen zu entnehmen. Dabei weist der Wasserwaagenkörper Seitenflächen auf, die parallel zueinander verlaufen. Da eine Seitenfläche rinnenförmig ausgebildet ist, weist entsprechend die gegenüberliegende Seitenfläche eine konvexe Geometrie auf.

Der vorliegenden Erfindung liegt die Aufgabe zu Grunde, eine Wasserwaage der eingangs genannten Art so weiterzubilden, dass der Wasserwaagenkörper unter ergonomischen Gesichtspunkten ein sicheres Erfassen und Handhaben ermöglicht, wobei gleichzeitig eine stabile Standfläche zur Verfügung gestellt werden soll. Ferner soll dann, wenn ein Anlegen an eine schräg bzw. vertikal verlaufende Fläche erfolgt, ein sicheres Halten und damit ein Vermeiden eines Verrutschens gewährleistet sein.

Zur Lösung der Aufgabe sieht die Erfindung im Wesentlichen vor, dass sich die zweite Seitenfläche aus einem kopfseitig verlaufenden ersten Abschnitt konvexen Verlaufs und einem sich anschließenden zweiten Abschnitt zusammensetzt, dessen Abstand zu der Hochachse des Profilkörpers von dem ersten Abschnitt ausgehend in Richtung der Messfläche zunimmt.

Abweichend von vorbekannten Wasserwaagenkörpern wird ein Profilkörper vorgeschlagen, der in Bezug auf eine Ebene, in der seine Hochachse liegt, asymmetrisch über die gesamte Länge des Profilkörpers ausgebildet ist, wobei eine Seitenfläche einen rinnenförmigen Verlauf zeigt, der auch als konkaver Verlauf bezeichnet werden kann. Insoweit sind "rinnenförmig" und "konkav" Synonyme. Hierdurch ist ein sicheres Anlegen an eine vertikal verlaufende Fläche möglich, da die den konkaven Bereich begrenzenden Ränder eine linienförmige Krafteinleitung in die vertikal verlaufende Fläche mit der Folge ermöglichen, dass eine weitgehende Unverrückbarkeit mit geringer Krafteinleitung ermöglicht wird.

Die einen konkaven bzw. rinnenförmigen Verlauf aufweisende erste Seitenfläche wird insbesondere von Rändern oder Kanten begrenzt, die in einer Ebene liegen, die senkrecht zur Messfläche verläuft.

Der zweite Abschnitt der zweiten Seitenfläche ist insbesondere eben, verläuft also im Schnitt entlang einer Geraden.

Dabei wird insbesondere vorgeschlagen, dass Abstand des zweiten Abschnitts zur Hochachse des Profilkörpers von dem ersten Abschnitt ausgehend in Richtung der Messfläche zunimmt, wobei bevorzugterweise der erste den konvexen Verlauf aufweisende Abschnitt der zweiten Seitenfläche abschnittsweise seitlich über der Kopffläche vorsteht.

Es wird folglich ein Wasserwaagenkörper mit asymmetrischem Profil vorgeschlagen, dessen eine Seitenfläche einen konkaven Verlauf aufweist und dessen andere Seitenfläche sich aus einem unteren geraden Abschnitt und einem sich anschließenden oberen konvexen Abschnitt zusammensetzt.

Die beschriebene Geometrie bezieht sich dabei auf die jeweiligen Außenflächen der Längsseiten.

Durch den Verlauf des unteren Abschnitts der zweiten Seitenfläche ergibt sich eine im Vergleich zu bekannten Wasserwaagenkörpern breitere Aufstandsfläche. Auch ist eine höhere Festigkeit in Richtung der Querachse im Vergleich zu Wasserwaagen gegeben, die ein Rechteckprofil besitzen.

Durch die Gestaltung des oberen Abschnitts der zweiten Seitenfläche, also durch den konvexen Verlauf ist des Weiteren ein sicheres Erfassen gewährleistet, wobei die Wasserwaage automatisch derart erfasst wird, dass sich der nach außen gebogene Abschnitt der zweiten Seitenfläche in der Handfläche befindet, da sich die Wasserwaage in diesem Fall angenehmer in der Hand als in der Position anfühlt, in der die konkave Fläche und damit der diese begrenzende Rand die Handinnenfläche berührt.

Insbesondere sieht die Erfindung vor, dass die erste Seitenfläche kopfseitig von einem eine Kante des Profilkörpers bildenden Längsrand der Kopfwandung und bodenseitig von einem eine Kante des Profilkörpers bildenden ersten Längsrand der Bodenwandung begrenzt ist.

Dabei sollten die Längsränder außenseitig in einer Ebene verlaufen, die sich senkrecht zur Bodenfläche erstreckt.

Auf diese Weise stehen zwei Anzeichenhilfen zur Verfügung, die durch die die erste Seitenfläche begrenzenden Längsränder bzw. -kanten des Profilkörpers gebildet werden und an einer Abstützfläche anlegbar sind.

Die zweite Seitenfläche zeichnet sich auch dadurch aus, dass der konvexe erste Abschnitt stetig in den zweiten Abschnitt übergeht, der außenseitig eine geneigt zur Bodenfläche verlaufende Ebene bildet. Dabei sollte der zweite Abschnitt bodenseitig von einem die Messfläche begrenzenden eine Kante des Profilkörpers bildenden zweiten Längsrand der Bodenwandung begrenzt sein.

Die diesbezügliche Kante bildet eine Anzeichenkante, wobei insbesondere vorgesehen ist, dass diese eine stufenförmige Längsrandaussparung aufweist, so dass eine einwandfreie Markierung auch dann erfolgen kann, wenn z. B. ein Anzeichnen mit Tusche erfolgen sollte. Außerdem ist dadurch die eigentliche Messfläche geschützt, da deren Kante nicht in der Ebene der Seitenfläche verläuft.

Unabhängig hiervon sollte der erste Abschnitt der zweiten Seitenfläche von der Kopffläche ausgehen.

Bevorzugterweise ist vorgesehen, dass der erste Abschnitt der zweiten Seitenfläche sich über 1/2 bis 1/4, insbesondere etwa 1/3 der Höhe des Profilkörpers erstreckt.

In hervorzuhebender Weiterbildung schlägt die Erfindung vor, dass der Profilkörper Innenkammern begrenzende Innenwandungen aufweist, wobei bevorzugterweise in zumindest einer Innenkammer ein Funktionselement wie Leuchtmittel und/oder Batterie angeordnet ist.

Bevorzugte Geometrien des Profilkörpers sind in nachstehenden Merkmalen zu sehen.

So kann eine sich entlang der Hochachse erstreckende von der Kopfwandung ausgehende erste Innenwandung eine im Schnitt dreieckförmige erste Innenkammer begrenzen, die außenseitig von einem kopfseitig verlaufenden Abschnitt der die erste Seitenfläche aufweisenden ersten Seitenwandung begrenzt ist.

Alternativ oder ergänzend begrenzt eine sich entlang der Hochachse erstreckende von der Kopfwandung ausgehende zweite Innenwandung eine im Schnitt die Geometrie eines Kreisabschnitts, vorzugsweise eines Halbkreises aufweisende zweite Innenkammer, die von einem Abschnitt der zweiten Seitenwandung begrenzt ist, die außenseitig den ersten Abschnitt der zweiten Seitenfläche aufweist.

Um Einbausysteme positionsgenau einzubringen, ist vorgesehen, dass die erste und zweite Seitenwandung stegartig ausgebildet sind und profilkörperinnenseitig parallel zueinander verlaufende Anschlusskanten oder -flächen aufweisen.

Hervorzuheben ist des Weiteren, dass die das optische Erfassen der Libelle ermöglichende Aussparung den ersten Abschnitt der zweiten Seitenfläche, die Kopfwandung beabstandet zu deren Längsrand und kopfseitig verlaufenden Bereich der ersten Seitenfläche durchsetzt. Hierdurch bleibt der kopfseitige Längsrand der ersten Seitenwandung durchgehend ausgebildet d.h., dass die erste Seitenwandung grundsätzlich im Bereich der Libelle von einem Steg begrenzt ist.

Aufgrund der Gestaltung der Seitenflächen besteht die Möglichkeit, in einem einzigen Fräsvorgang die Aussparung im Bereich der Kopffläche herzustellen, wobei die obere Kante, die die erste Seitenfläche kopfseitig begrenzt, durchgehend ausgebildet ist und somit eine obere Anzeichenhilfe bietet. So kann beim Fräsen ohne Umsetzen bereichsweise die erste Seitenwandung, die Kopfwandung sowie die zweite Seitenwandung herausgearbeitet werden, ohne dass der obere Rand bzw. die obere Kante, die den Übergang zwischen Kopfwandung und erster Seitenwandung begrenzt, durchtrennt wird; denn die erste Seitenwandung verläuft in Bezug auf den oberen Rand in Richtung der Hochachse des Profilkörpers vom Rand ausgehend zunächst zurückversetzt. So kann beim Fräsen ohne Umsetzen und Änderung des Fräsniveaus die Aussparung herausgearbeitet werden.

Somit wird eine durchgehende Anzeichenhilfe zur Verfügung gestellt, wobei ungeachtet dessen eine in die Aussparung eingesetzte Libelle sowohl von den Seitenflächen als auch von der Kopffläche aus betrachtet optisch gut erfassbar ist.

Des Weiteren kann eine dritte Innenwandung zwischen bodenseitigem Bereich der zweiten Seitenwandung und der Bodenwandung verlaufen und aus zwei hochachsenseitig einen überstumpfen Winkel einschließenden stegartigen Abschnitten bestehen.

In Weiterbildung kann eine vierte Zwischenwandung zwischen einem bodenseitigen Abschnitt der ersten Seitenwandung und der Bodenwandung verlaufen und aus zwei hochachsenseitig einen überstumpfen Winkel einschließenden stegartigen Abschnitten bestehen.

Unabhängig hiervon kann der Profilkörper, der ein Abschnitt eines Strangprofils ist, aus Kunststoff oder Metall bestehen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform eines Wasserwaagenkörpers,
- Fig. 2: eine zweite Ausführungsform eines Wasserwaagenkörpers und
- Fig. 3: einen Querschnitt durch den Wasserwaagenkörper gemäß Fig. 1 und Fig. 2 außerhalb von Libellen.

Den Figuren, in denen für gleiche Elemente gleiche Bezugszeichen verwendet werden, sind Ausführungsformen von Wasserwaagenkörpern 10, 12 zu entnehmen, die sich dadurch auszeichnen, dass die Längsseitenaußenflächen 14, 16 in Bezug auf die Hochachse 18 asymmetrisch ausgebildet sind, also einen voneinander abweichenden Verlauf aufweisen.

In entsprechende Wasserwaagenkörper 10, 12 werden in Aussparungen 20, 22, 24 Libellenhalterungen mit Libellen eingesetzt. Ferner wird der aus einem Hohlkörperprofil bestehende Wasserwaagenkörper endseitig von insbesondere aus Kunststoff bestehenden Kappen verschlossen. Insoweit wird jedoch auf hinlänglich bekannte Konstruktionen verwiesen.

Erfindungsgemäß unterscheidet sich der Wasserwaagenkörper 10, 12 von vorbekannten dahingehend, dass erwähntermaßen dessen Längsseitenflächen 14, 16 in Längsrichtung des Wasserkörpers 10, 12 betrachtet einen asymmetrischen Verlauf in Bezug auf eine Ebene aufweisen, in der die Hochachse 18 liegt. Die Wasserwaagenkörper 10, 12 weichen in Bezug auf ihre kopfseitigen Aussparungen 20, 22 zur Aufnahme von Libellenhalterungen voneinander ab. Ansonsten stimmen die Wasserwaagenkörper 10, 12 insoweit überein, dass diese Profilkörper 13 in Form von Abschnitten eines Strangprofils sind. Somit erstreckt sich die Asymmetrie über die gesamte Länge des Wasserwaagenkörpers 10, 12.

Der Hohlprofilkörper 13 besteht in gewohnter Weise aus einer außenseitig eine Messfläche 26 zur Verfügung stellende Bodenwandung 28, einer außenseitig eine Kopffläche 30 bildenden Kopfwandung 32 sowie stegförmigen Seitenwandungen 34, 36, die außenseitig die erste Seitenfläche 14 bzw. die zweite Seitenfläche 16 aufweisen.

Die Kopffläche 30 verläuft bereichsweise parallel zur Messfläche 26 und kann somit gleichfalls die Funktion einer Messfläche ausüben.

Die erste Seitenfläche 14 weist einen rinnenförmigen oder konkaven Verlauf auf. Die erste Seitenfläche 14 und damit die erste Seitenwandung 34 wird von Längsrändern 38, 40 des Profilkörpers 13 begrenzt, die somit Längskanten von diesem sind. Die Kanten bilden folglich die Schnittgeraden zwischen der Kopfwandung 32 und der ersten Seitenwandung 34 bzw. zwischen dieser und der Bodenwandung 28.

Der rinnenförmige Verlauf kann einer im Schnitt bogenförmigen, dachförmigen oder trapezförmigen Geometrie entsprechen, um nur beispielhaft Formen zu nennen, die eine Rinnenform bzw. einen konkaven Verlauf bilden.

Die zweite Seitenaußenfläche 16 weist einen einen konvexen Verlauf aufweisenden oberen oder ersten Abschnitt 42 und einen eine Ebene aufspannenden unteren oder zweiten Abschnitt 44 auf, die bzw. der außenseitig im Schnitt einer Geraden folgt. Dabei geht der obere Abschnitt 42 vorzugsweise stetig in den unteren geradlinigen Abschnitt 44 über, so dass sich im Übergangsbereich ein konkaver Abschnitt 46 ergibt.

Der konvex verlaufende obere oder erste Abschnitt 42 der zweiten Längsseite 16 erstreckt sich vorzugsweise über in etwa 1/3 der Höhe des Wasserwaagenkörpers 10, 12.

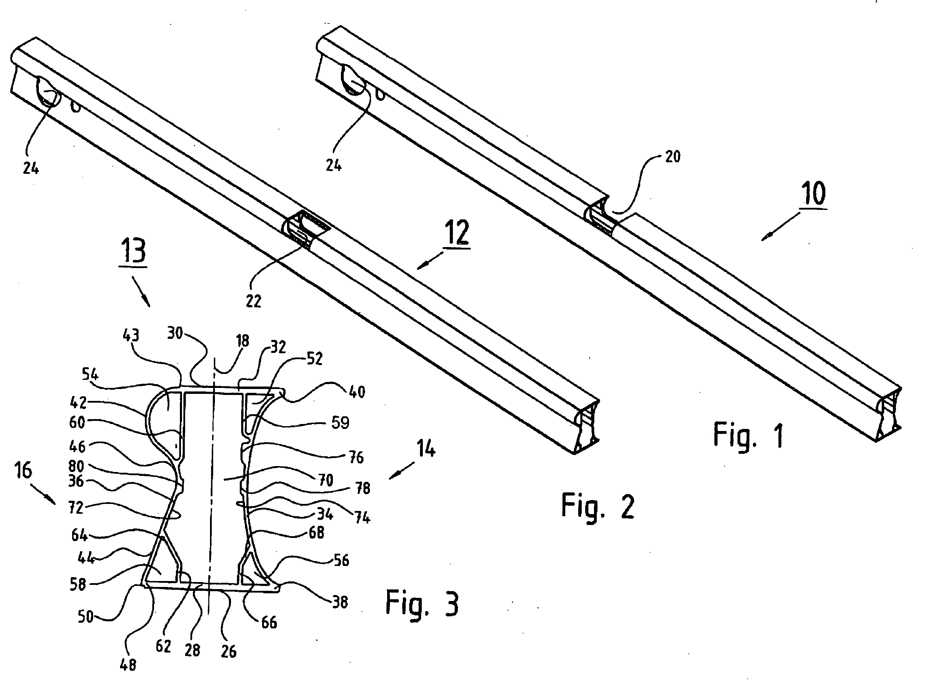

Wie sich aus der zeichnerischen Darstellung der Fig. 3 ergibt, nimmt der Abstand des zweiten Abschnitts 44, also des geradlinigen Abschnitts zur Hochachse 18 des Profilkörpers vom Ende des ersten Abschnitts 42 ausgehend in Richtung der Messfläche 26 zu. Somit ergibt sich eine relativ breite Messfläche 26 und somit Standfläche für den Wasserwaagenkörper 10, 12 und damit für die Wasserwaage selbst.

Der untere den zweiten Abschnitt 44 umfassende Teil des Wasserwaagenkörpers 10, 12 weist somit im Schnitt die Geometrie eines asymmetrischen Trapezes auf.

Ferner steht der außenseitig konvex verlaufende erste Abschnitt 42 über der Kopffläche 30 seitlich vor.

Aus der zeichnerischen Darstellung - die im Übrigen selbsterklärend ist - ergibt sich des Weiteren, dass die die erste Seitenwandung 34 begrenzenden Längsränder bzw. Kanten 38, 40 in einer Ebene verlaufen, die sich senkrecht zu der Messfläche 26 erstreckt.

Die Messfläche 26 wird von dem unteren Längsrand bzw. der unteren Längskante 38 des Profilkörpers 13 sowie von einem zweiten Längsrand bzw. Längskante 48 begrenzt, in der der zweite Abschnitt 44 der zweiten Längsseite 46 endet. Dabei verläuft in Längsrichtung des zweiten Längsrandes 48 eine Stufe 50, die als Anzeichenhilfe genauso dient wie die Begrenzungen der Messfläche 26 bzw. der Kopffläche 30, also die Längsränder 38, 40.

Durch den asymmetrischen Verlauf der Seitenflächen 14, 16 ist der Profilkörper 13 bzw. der Wasserwaagenkörper 10, 12 und damit die Wasserwaage ergonomisch günstig ausgebildet, wodurch die Handhabbarkeit erleichtert wird; denn durch die Längsränder 38, 40 und den zwischen diesen verlaufenden konkaven Bereich des Wasserwaagenkörpers 10, 12 und dem auf der gegenüberliegenden Längsseite vorhandenen konvexen oberen ersten Abschnitt 42 wird der Wasserwaagenkörper 10, 12 automatisch derart erfasst, dass der konvexe Bereich in einer Handfläche zu liegen kommt, da andernfalls der Längsrand 40 bzw. 38 störend wirken würde. Die konkave bzw. rinnenförmige erste Seitenfläche 14 wird folglich von Fingern einer Hand berührt.

Durch die Geometrie des Wasserwaagenkörpers 10, 12 und die Längsränder 38, 40 ist ein sicheres Anlegen des Wasserwaagenkörpers 10, 12 an eine schräg bzw. vertikal verlaufende Fläche möglich, wobei ein linienförmiger Kontakt mit der Folge gegeben ist, dass mit geringer Krafteinleitung in den Wasserwaagenkörper 10, 12 ein sicheres Fixieren erfolgt. Somit kann ein sicheres Ausrichten der Wasserwaage und ein Anzeichnen von Strichen erfolgen.

Wie die Darstellungen verdeutlichen, weist der Wasserwaagenkörper 10, 12, also der Profilkörper 13 Innenkammern 52, 54, 56, 58 auf, die im jeweiligen oberen und unteren Rand, also im Bereich der Kopfwandung 32 und der Bodenwandung 28 sich in Längsrichtung des Profilkörpers erstrecken. Die erste Innenkammer 52 wird durch eine stegartige erste Zwischenwandung 58 begrenzt, die in etwa parallel zur Hochachse 18 verläuft und eine im Schnitt dreieckförmige erste Kammer 52 begrenzt, die außenseitig von der ersten Seitenwandung 38 abgeschlossen wird. Die zweite Innenkammer 54 weist im Schnitt eine in etwa kreisabschnittförmige Geometrie auf und wird von einer stegartigen zweiten Innenwandung 60 begrenzt, die parallel zur Hochachse 18 verläuft.

Im Bereich der unteren Längskanten oder -ränder 38, 40 verlaufen die dritte und vierte Innenkammer 56, 58, die hochachsenseitig von stegartigen Wandungen 62, 64 bzw. 66, 68 begrenzt sind, die hochachsenseitig einen überstumpfen Winkel einschließen.

Die Innenkammern 52, 54, 56, 58 können z.B. zur Aufnahme von Funktionselementen - wie Batterie, Leuchtmittel, Diode, Chip - dienen. Gleiches gilt für die Innenkammer 70, die von den Innenwandungen 59, 60, 62, 64, 66, 68 und den verbleibenden freien Flächen der Seitenwandungen 34, 36 begrenzt wird.

Ferner können von den Innenflächen 72, 74 der Seitenwandungen 34, 36 Anschlagkanten oder Vorsprünge 76, 78, 80 ausgehen, die zur geführten Aufnahme von Funktionselementen dienen.

Die Aussparungen 20, 22, 24 können aus dem Profilkörper 13 herausgefräst werden. Dabei ist insbesondere bei der Ausführungsform der Fig. 2 der Vorteil gegeben, dass die Anzeichenhilfe, die durch die obere Kante bzw. den oberen Längsrand 40 gebildet wird, durchgehend ausgebildet ist, ohne dass die in die Aussparung 22 eingesetzte Libelle in einem Umfang optisch abgedeckt wird, dass ein Erfassen von den Seitenflächen 14, 16 und der Kopffläche 30 beeinträchtigt wird. Die Aussparung 22 kann ferner in einem einzigen Fräsgang herausgearbeitet werden, ohne dass ein Umsetzen erfolgt; denn bei einem Fräsen entlang der Hochachse - aber auch entlang der Querachse - können in einem Arbeitsgang Bereiche des oberen konvexen Abschnitts 42 der Seitenwandung 36, die Zwischenwandung 60, die Kopfwandung 32, die Innenwandung 59 sowie Bereiche der die erste Innenkammer 52 begrenzenden ersten Seitenwandung 34 herausgefräst werden, ohne dass der Längsrand 60 unterbrochen wird, und somit nach dem Fräsen im Bereich der Aussparung 22 als Steg verbleibt. Dies liegt an der geometrischen Ausbildung des Profilkörpers, da die erste Seitenwandung 34 von dem Längsrand bzw. der - kante 40 ausgehend in Richtung der Hochachse 18 abstandsmäßig abnimmt.

Der Wasserwaagenkörper 10, 12 ist erwähntermaßen ein Hohlprofilkörper und ein Abschnitt eines Strangprofils insbesondere aus Metall. Selbstverständlich kann das Strangprofil auch aus Kunststoff bestehen.

Das Strangprofil ist in Bezug auf seine senkrecht zu der Messfläche 26 und der Kopffläche 30 verlaufenden Hochachse 18 über seine Länge asymmetrisch, d.h., die entlang der Hochachse 18 verlaufenden Außenwandungen verlaufen nicht symmetrisch zu einer senkrecht zu der Messfläche 26 verlaufenden Ebene, in der die Hochachse 18 liegt. Eine der Außenwandungen weist außenseitig einen rinnenförmigen Verlauf und die gegenüberliegende Außenwandung außenseitig einen nach außen gewölbten Abschnitt und einen von diesem ausgehenden ebenen Abschnitt auf, dessen Abstand von dem gewölbten Abschnitt ausgehend zur Hochachse in Richtung der die Messfläche zur Verfügung stellenden Wandung zunimmt.

## Patentansprüche

1. Wasserwaage umfassend einen Profilkörper (13) insbesondere Hohlkammerprofilkörper, als Wasserwaagenkörper mit einer eine erste Außenfläche (26) in Form einer Messfläche (26) zur Verfügung stellenden Bodenwandung (28), einer dieser gegenüberliegenden Kopfwandung (32) mit zumindest abschnittsweise parallel zu der Messfläche verlaufender zweiten Außenfläche (30) in Form einer Kopffläche sowie die Bodenwandung mit der Kopfwandung verbindenden Seitenwandungen (34, 36), die zum einen eine äußere erste Seitenfläche (14) und zum anderen eine äußere zweite Seitenfläche (14, 16) aufweisen, wobei der Profilkörper zumindest einen Libellenkörper aufweist, dessen Libelle optisch vorzugsweise zumindest über eine die Kopfwandung durchsetzende Aussparung (20) erfassbar ist, und wobei der Profilkörper (13) in Bezug auf seine senkrecht zu der Messfläche (26) verlaufende Hochachse (18) seitenflächenseitig über die Länge des Profilkörpers asymmetrisch ausgebildet ist und eine Seitenfläche als die erste Seitenfläche (14) in Längsrichtung des Profilkörpers betrachtet einen rinnenförmigen Verlauf aufweist,
**dadurch gekennzeichnet,**
**dass** sich die zweite Seitenfläche (16) aus einem kopfseitig verlaufenden ersten Abschnitt (42) konvexen Verlaufs und einem sich anschließenden zweiten Abschnitt (44) zusammensetzt, dessen Abstand zu der Hochachse (18) des Profilkörpers (13) von dem ersten Abschnitt (42) ausgehend in Richtung der Messfläche (26) zunimmt.

2. Wasserwaage nach Anspruch 1,
**dadurch gekennzeichnet,**
**dass** die erste Seitenfläche (14) kopfseitig von einem eine Kante des Profilkörpers (13) bildenden Längsrand (40) der Kopfwandung (32) und bodenseitig von einem eine Kante des Profilkörpers bildenden ersten Längsrand (38) der Bodenwandung (28) begrenzt ist, wobei insbesondere die Längsränder (38, 40) außenseitig in einer Ebene verlaufen, die sich senkrecht zur Messfläche (26) erstreckt.

3. Wasserwaage nach zumindest Anspruch 1,
**dadurch gekennzeichnet,**
**dass** der erste den konvexen Verlauf aufweisende Abschnitt (42) der zweiten Seitenfläche (16) seitlich über der Kopffläche (30) vorsteht und vorzugsweise stetig in den zweiten Abschnitt (44) übergeht, der eine geneigt zur Bodenfläche (26) verlaufende Ebene bildet.

4. Wasserwaage nach zumindest einem der vorhergehenden Ansprüche,
**dadurch gekennzeichnet,**
**dass** der zweite Abschnitt (44) bodenseitig von einem die Messfläche begrenzenden eine Kante des Profilkörpers (13) bildenden zweiten Längsrand (50) der Bodenwandung (28) begrenzt ist, der vorzugsweise eine als Anzeichenkaiite dienende stufenförmige Längsaussparung (50) aufweist.

5. Wasserwaage nach zumindest einem der vorhergehenden Ansprüche,
**dadurch gekennzeichnet,**
**dass** der zweite Längsrand (50) der Bodenwandung (28) seitlich über den ersten Abschnitt (42) der zweiten Seitenfläche (16) vorsteht, der sich vorzugsweise über 1/2 bis 1/4, insbesondere etwa 1/3 der Höhe des Profilkörpers erstreckt.

6. Wasserwaage nach zumindest einem der vorhergehenden Ansprüche,
**dadurch gekennzeichnet,**
**dass** der Profilkörper (13) Innenkammern (52, 54, 56, 58, 70) begrenzende Innenwandungen (59, 60, 62, 64, 66, 68) aufweist, wobei vorzugsweise in zumindest einer Innenkammer (70) ein Funktionselement wie Leuchtmittel und/oder Batterie angeordnet ist.

7. Wasserwaage nach zumindest einem der vorhergehenden Ansprüche,
**dadurch gekennzeichnet,**
**dass** eine sich entlang der Hochachse (18) erstreckende von der Kopfwandung (32) ausgehende erste Innenwandung (58) eine im Schnitt dreieckförmige erste Innenkammer (52) begrenzt, die außenseitig von einem kopfseitig verlaufenden Abschnitt der die erste Seitenfläche (14) aufweisenden ersten Seitenwandung (34) begrenzt ist, oder
**dass** eine sich entlang der Hochachse (18) erstreckende von der Kopfwandung (32) ausgehende zweite Innenwandung (60) eine im Schnitt eine Geometrie eines in etwa Kreisabschnitts, insbesondere in etwa eines Halbkreises aufweisende zweite Innenkammer (54) begrenzt, die von einem Abschnitt der zweiten Seitenwandung (36) begrenzt ist, die außenseitig den ersten Abschnitt (42) der zweiten Seitenfläche (16) aufweist.

8. Wasserwaage nach zumindest einem der vorhergehenden Ansprüche,
**dadurch gekennzeichnet,**
**dass** der erste Abschnitt (42) der zweiten Seitenfläche (16) vorzugsweise über eine Stufe (43) von der Kopffläche (30) ausgeht.

9. Wasserwaage nach zumindest einem der vorhergehenden Ansprüche,
**dadurch gekennzeichnet,**
**dass** eine dritte Innenwandung (62, 64) zwischen bodenseitigem Bereich der zweiten Seitenwandung (36) und der Bodenwandung (28) verläuft und aus zwei hochachsenseitig einen überstumpfen Winkel einschließenden stegartigen Abschnitten besteht und/oder
**dass** eine vierte Zwischenwandung (66, 68) zwischen einem bodenseitigen Abschnitt der ersten Seitenwandung (34) und der Bodenwandung (28) verläuft und aus zwei hochachsenseitig einen überstumpfen Winkel einschließenden stegartigen Abschnitten besteht.

10. Wasserwaage nach zumindest einem der vorhergehenden Ansprüche,
**dadurch gekennzeichnet,**
**dass** die das optische Erfassen der Libelle ermöglichende Aussparung (20,22) den ersten Abschnitt (42) der zweiten Seitenfläche (16), die Kopfwandung (32) beabstandet zu deren Längsrand (40) und kopfseitig verlaufenden Bereich der ersten Seitenfläche (14) durchsetzt.

11. Wasserwaage nach zumindest einem der vorhergehenden Ansprüche,
**dadurch gekennzeichnet,**
**dass** der kopfseitige Längsrand (40) der ersten Seitenwandung (34) durchgehend ausgebildet ist, wobei die Aussparung (22) vorzugsweise in einem umsetzungsfreien, insbesondere parallel zur Hochachse (18) verlaufenden Fräsvorgang bei gleich bleibender Frästiefe hergestellt ist.

12. Wasserwaage nach zumindest einem der vorhergehenden Ansprüche,
**dadurch gekennzeichnet,**
**dass** der Hohlprofilkörper (13) Abschnitt eines Strangprofils vorzugsweise mit die Innenwandungen (58, 60, 62, 64, 66, 68) bildenden Längsstegen ist.

13. Wasserwaage nach zumindest einem der vorhergehenden Ansprüche,
**dadurch gekennzeichnet,**
**dass** Breitenerstreckung der Messfläche (26) größer als Breitenerstreckung der parallel zu der Messfläche verlaufenden Kopffläche (30) ist.

14. Wasserwaage nach zumindest einem der vorhergehenden Ansprüche,
**dadurch gekennzeichnet,**
**dass** die erste und die zweite Seitenwandung (34, 36) stegartig ausgebildet sind und profilkörperinnenseitig parallel zueinander verlaufende Anschlusskanten oder -flächen (76, 78, 80) aufweisen.

## Claims

1. Spirit level comprising a profiled body (13), particularly a hollow chamber profiled body, as spirit level body, with a bottom wall (28) which makes available a first outer surface (26) in the form of a measurement surface (26), a head wall (32) facing this bottom wall, with a second outer surface (30), which runs at least in sections parallel to the measurement surface, and is in the form of a head surface, as well as side walls (34, 36), which connect the bottom wall to the head wall, and which present, on the one hand, a first outer lateral face (14), and, on the other hand, a second outer lateral face (14, 16), wherein the profiled body presents at least one vial body, whose bubble vial can be optically detected preferably via at least a recess (20) which passes through the head wall, and wherein the profiled body (13), with respect to its vertical axis (18) which runs perpendicularly to the measurement surface (26), presents a design on the lateral face that is asymmetric over the length of the profiled body, and a lateral face, as the first lateral face (14) viewed in the longitudinal direction of the profiled body, presents a channel-shaped course,
**characterized in that**,
the second lateral face (16) consists of a first section (42), which runs on the head side and presents a convex course, and a subsequent second section (44) whose separation from the vertical axis (18) of the profiled body (13) increases starting from the first section (42) in the direction of the measurement surface (26).

2. Spirit level according to claim 1,
**characterized in that**,
the first lateral face (14), on the head side, is delimited by a longitudinal margin (40) of the head wall (32), which forms an edge of the profiled body (13), and, on the bottom side, by a first longitudinal margin (38) of the bottom wall (28), which forms an edge of the profiled body, wherein particularly the longitudinal margins (38, 40) extend on the outside in a plane which extends perpendicularly to the measurement surface (26).

3. Spirit level according to claim 1,
**characterized in that**,
the first section (42) of the second side wall (16), which presents the convex course, protrudes laterally over the head surface (30), and merges preferably continuously into the second section (44), which forms a plane that runs at an inclination with respect to the bottom surface (26).

4. Spirit level according to at least one of the previous claims,
**characterized in that**,
the second section (44), on the bottom side, is delimited by a second longitudinal margin (50) of the bottom wall (28), which delimits the measurement surface and forms an edge of the profiled body (13), and which preferably presents a step-shaped longitudinal recess (50) which serves as drawing edge.

5. Spirit level according to at least one of the previous claims,
**characterized in that**,
the second longitudinal margin (50) of the bottom wall (28) protrudes laterally over the first section (42) of the second lateral face (16) and preferably extends over ½ to ¼, particularly approximately ¹/₃ of the height of the profiled body.

6. Spirit level according to at least one of the previous claims,
**characterized in that**,
the profiled body (13) presents inner walls (59, 60, 62, 64, 66, 68) delimiting inner chambers (52, 54, 56, 58, 70), wherein preferably in at least one inner chamber (70), a functional element, such as, a lamp and/or battery, is arranged.

7. Spirit level according to at least one of the previous claims,
**characterized in that**,
a first inner wall (58), extending along the vertical axis (18) and starting from the head wall (32), delimits a first inner chamber (52) with a triangular cross section, which is delimited on the outside by a section of the first side wall (34) which runs on the head side, and which presents the first lateral face (14), or
a second inner wall (60), extending along the vertical axis (18) starting from the head wall (32), delimits a second inner chamber (54), which in cross section presents approximately the geometry of a segment of a circle, particularly approximately a semicircle, and which is delimited by a section of the second side wall (36), which, on the outside, presents the first section (42) of the second lateral face (16).

8. Spirit level according to at least one of the previous claims,
**characterized in that**,
the first section (42) of the second lateral face (16) preferably starts over a step (43) from the head surface (30).

9. Spirit level according to at least one of the previous claims,
**characterized in that**,
a third inner wall (62, 64) runs between the bottom-side area of the second side wall (36) and the bottom wall (28), and consists of two web-like sections which, on the side of the vertical axis, enclose a concave angle, and/or
a fourth intermediate wall (66, 68) runs between a bottom-side section of the first side wall (34) and the bottom wall (28), and consists of two web-like sections which, on the side of the vertical axis, enclose a concave angle.

10. Spirit level according to least one of the previous claims,
**characterized in that**,
the recess (20, 22) which allows the optical detection of the bubble vial, passes through the first section (42) of the second lateral face (16), the head wall (32) at a separation from its longitudinal margin (40) and head-side area of the first lateral face (14).

11. Spirit level according to least one of the previous claims,
**characterized in that**,
the head-side longitudinal margin (40) of the first side wall (34) is designed to be continuous, wherein the recess (22) is produced preferably in a milling process, particularly one that is parallel to the vertical axis (18), which requires no transposition, at milling depths that remain constant.

12. Spirit level according to least one of the previous claims,
**characterized in that**,
the hollow profiled body (13) is a section of an extruded profile, preferably with longitudinal webs forming the inner walls (58, 60, 62, 64, 66, 68).

13. Spirit level according to least one of the previous claims,
**characterized in that**,
the width extension of the measurement surface (26) is greater than the width extension of the head surface (30) running parallel to the measurement surface.

14. Spirit level according to least one of the previous claims,
**characterized in that**,
the first and the second side wall (34, 36) have a web-like design, and they present, on the inner side of the profiled body, mutually parallel connection edges or surfaces (76, 78, 80).

## Revendications

1. Niveau à bulle comprenant un corps profilé (13), en particulier un corps profilé creux, en tant que corps de niveau à bulle avec une paroi inférieure (28) mettant à disposition une première face extérieure (26) sous forme de surface de mesure (26), une paroi supérieure (32) opposée à ladite paroi inférieure, avec une deuxième face extérieure (30) sous forme de face supérieure au moins partiellement parallèle à la surface de mesure, ainsi que des parois latérales (34, 36) reliant la paroi inférieure à la paroi supérieure et qui présentent d'une part une première face latérale extérieure (14) et d'autre part une deuxième face latérale extérieure (14, 16), sachant que le corps profilé présente au moins un corps de nivelle dont la nivelle peut être saisie visuellement de préférence au moins grâce à un évidement (20) pratiqué dans la paroi supérieure, et que, par rapport à son axe vertical (18) s'étendant perpendiculairement à la surface de mesure (26), le corps profilé (13) est latéralement conçu de façon asymétrique sur la longueur du corps profilé et qu'une face latérale en tant que première face latérale (14) présente, vue dans le sens longitudinal du corps profilé, une allure en forme de goulotte,
**caractérisé en ce**
**que** la deuxième face latérale (16) se compose d'une première partie (42) supérieure d'allure convexe suivie d'une deuxième partie (44) dont la distance à l'axe vertical (18) du corps profilé (13) augmente à partir de la première partie (42) en direction de la surface de mesure (26).

2. Niveau à bulle selon la revendication 1,
**caractérisé en ce**
**que** dans sa zone supérieure, la première face latérale (14) est délimitée par un bord longitudinal (40) de la paroi supérieure (32) formant une arête du corps profilé (13), et dans sa zone inférieure, par un premier bord longitudinal (38) de la paroi inférieure (28) formant une arête du corps profilé, sachant qu'en particulier vers l'extérieur, les bords longitudinaux (38, 40) se situent dans un plan qui s'étend perpendiculairement à la surface de mesure (26).

3. Niveau à bulle selon au moins la revendication 1,
**caractérisé en ce**
**que** la première partie (42) de la deuxième face latérale (16) présentant l'allure convexe fait saillie latéralement sur la face supérieure (30) et se prolonge de préférence de manière continue en la deuxième partie (44), laquelle forme un plan incliné par rapport à la face inférieure (26).

4. Niveau à bulle selon au moins une des revendications précédentes,
**caractérisé en ce**
**que** dans sa zone inférieure, la deuxième partie (44) est délimitée par un deuxième bord longitudinal (50) de la paroi inférieure (28) délimitant la surface de mesure et formant une arête du corps profilé (13), lequel bord présentant de préférence un évidement longitudinal (50) en décrochement servant d'arête de marquage.

5. Niveau à bulle selon au moins une des revendications précédentes,
**caractérisé en ce**
**que** le deuxième bord longitudinal (50) de la paroi inférieure (28) fait saillie latéralement sur la première partie (42) de la deuxième face latérale (16), ladite première partie s'étendant de préférence sur 1/2 à 1/4, en particulier approximativement sur 1/3 de la hauteur du corps profilé.

6. Niveau à bulle selon au moins une des revendications précédentes,
**caractérisé en ce**
**que** le corps profilé (13) présente des parois intérieures (59, 60, 62, 64, 66, 68) délimitant des cavités intérieures (52, 54, 56, 58, 70), sachant que de préférence dans au moins une cavité intérieure (70) est disposé un élément fonctionnel tel qu'une source lumineuse et/ou une batterie.

7. Niveau à bulle selon au moins une des revendications précédentes,
**caractérisé en ce**
**qu'**une première paroi intérieure (58) partant de la paroi supérieure (32) et s'étendant le long de l'axe vertical (18) délimite une première cavité intérieure (52) triangulaire en coupe transversale, qui est délimitée vers l'extérieur par une partie supérieure de la première paroi latérale (34) présentant la première face latérale (14), ou
**qu'**une deuxième paroi intérieure (60) partant de la paroi supérieure (32) et s'étendant le long de l'axe vertical (18) délimite une deuxième cavité intérieure (54) présentant en coupe transversale une géométrie approximativement d'un segment de cercle, en particulier approximativement d'un demi-cercle, et qui est délimitée par une partie de la deuxième paroi latérale (36) qui présente vers l'extérieur la première partie (42) de la deuxième face latérale (16).

8. Niveau à bulle selon au moins une des revendications précédentes,
**caractérisé en ce**
**que** la première partie (42) de la deuxième face latérale (16) part de la face supérieure (30) de préférence depuis un décrochement (43).

9. Niveau à bulle selon au moins une des revendications précédentes,
**caractérisé en ce**
**qu'**une troisième paroi intérieure (62, 64) s'étend entre la zone inférieure de la deuxième paroi latérale (36) et la paroi inférieure (28), et est constituée côté axe vertical de deux parties semblables à des âmes inscrivant un angle rentrant et/ou
**qu'**une quatrième paroi intermédiaire (66, 68) s'étend entre une partie inférieure de la première paroi latérale (34) et la paroi inférieure (28), et est constituée côté axe vertical de deux parties semblables à des âmes inscrivant un angle rentrant.

10. Niveau à bulle selon au moins une des revendications précédentes,
**caractérisé en ce**
**que** l'évidement (20, 22) permettant la saisie visuelle de la nivelle coupe la première partie (42) de la deuxième face latérale (16), la paroi supérieure (32) à distance de son bord longitudinal (40) et la zone supérieure de la première face latérale (14).

11. Niveau à bulle selon au moins une des revendications précédentes,
**caractérisé en ce**
**que** le bord longitudinal supérieur (40) de la paroi latérale (34) est formé de manière ininterrompue, sachant que l'évidement (22) est de préférence réalisé par un fraisage sans changement de direction, en particulier parallèlement à l'axe vertical (18), avec une profondeur de coupe constante.

12. Niveau à bulle selon au moins une des revendications précédentes,
**caractérisé en ce**
**que** le corps profilé creux (13) est une partie d'un profilé extrudé, de préférence avec des âmes longitudinales formant les parois intérieures (58, 60, 62, 64, 66, 68).

13. Niveau à bulle selon au moins une des revendications précédentes,
**caractérisé en ce**
**que** la largeur de la surface de mesure (26) est supérieure à la largeur de la face supérieure (30) s'étendant parallèlement à la surface de mesure.

14. Niveau à bulle selon au moins une des revendications précédentes,
**caractérisé en ce**
**que** la première et la deuxième parois latérales (34, 36) sont formées à la manière d'âmes et présentent à l'intérieur du corps profilé des arêtes ou des surfaces de raccordement (76, 78, 80) parallèles entre elles.
